# EUROPÄISCHE PATENTANMELDUNG

(11) **EP 4 375 124 A1**
(43) Veröffentlichungstag der Anmeldung: **29.05.2024**
(21) Anmeldenummer: 23211608.7
(22) Anmeldetag: 22.11.2023
(51) Int. Cl.: B60L 53/302, B60L 53/31, H02B 1/56, H05K 7/20

(54) **LUFTFÜHRUNGSVORRICHTUNG, KLIMATISIERUNGSVORRICHTUNG SOWIE LADESTATION MIT EINER SOLCHEN LUFTFÜHRUNGSVORRICHTUNG UND EINER SOLCHEN KLIMATISIERUNGSVORRICHTUNG**

(30) Priorität: 24.11.2022 DE 102022131169
(71) Anmelder: ads-tec Energy GmbH, 72622 Nürtingen (DE)
(72) Erfinder: GREIF, Andreas, 73235 Weilheim (DE); MOLCHANOV, Roman, 72654 Neckartenzlingen (DE); SCHUCHTER, Johannes, 85630 Grasbrunn (DE); BAREIß, Simon, 73635 Rudersberg (DE)
(74) Vertreter: Kordel, Mattias

(57) **Zusammenfassung**

Die Erfindung betrifft eine Luftführungsvorrichtung (3) für eine Klimatisierungsvorrichtung (5) einer Ladestation (1) für Elektrofahrzeuge, wobei
- die Luftführungsvorrichtung (3) eine erste Grundfläche (21.1), eine der ersten Grundfläche (21.1) gegenüberliegende zweite Grundfläche (21.2) und eine die erste Grundfläche (21.1) und die zweite Grundfläche (21.2) verbindende Mantelfläche (22) aufweist, wobei die erste Grundfläche (21.1), die zweite Grundfläche (21.2) und die Mantelfläche (22) einen Luftführungsraum (41) einschließen, wobei
- in dem Luftführungsraum (41) ein Luftbereichstrennelement (43) angeordnet ist, das den Luftführungsraum (41) in einen Lufteinlassraum (41.1) und in einen Luftauslassraum (41.2) unterteilt, wobei
- die Mantelfläche (22) auf einer dem Lufteinlassraum (41.1) zugeordneten ersten Seite (45.1) eine Lufteinlassöffnung (47) und eine dem Luftauslassraum (41.2) zugeordneten zweiten Seite (45.2) eine Luftauslassöffnung (49) aufweist, wobei
- die erste Grundfläche (21.1) in dem Lufteinlassraum (41.1) einen Luftauslassanschluss (11) und in dem Luftauslassraum (41.2) einen Lufteinlassanschluss (15) aufweist, sodass
- die Lufteinlassöffnung (47) strömungstechnisch über den Lufteinlassraum (41.1) mit dem Luftauslassanschluss (11) und die Luftauslassöffnung (49) strömungstechnisch über den Luftauslassraum (41.2) mit dem Lufteinlassanschluss (15) verbunden ist.

Außerdem betrifft die Erfindung eine Klimatisierungsvorrichtung (5) zum Verbinden mit einer solchen Luftführungsvorrichtung (3) und
eine Ladestation (1) mit einer solchen Luftführungsvorrichtung (3) und mit einer solchen Klimatisierungsvorrichtung (5).

## Beschreibung

Die Erfindung betrifft eine Luftführungsvorrichtung für eine Klimatisierungsvorrichtung einer Ladestation für Elektrofahrzeuge, eine Klimatisierungsvorrichtung und eine Ladestation.

Fortschritte bei der Entwicklung von Batteriespeichern ermöglichen eine höhere elektrische Kapazität bei insbesondere gleichbleibendem Bauraum des Batteriespeichers. Dies führt dazu, dass in Elektrofahrzeugen Batteriespeicher mit einer höheren elektrischen Kapazität verbaut werden können.

Die Nutzer von Elektrofahrzeugen erwarten üblicherweise eine rasche Ladung des Batteriespeichers, um zeitnah weiterfahren zu können und sind somit nicht unbedingt bereit, aufgrund eines eine größere elektrische Kapazität aufweisenden Batteriespeichers länger an der Ladestation zu verweilen.

Aufgrund dessen ist es notwendig, dass eine Ladeleistung zum Laden des Batteriespeichers erhöht wird. Eine Erhöhung der Ladeleistung geht insbesondere mit einer Erhöhung des Ladestroms und der Ladespannung einher. Die dabei in der Ladestation entstehende Wärme wird üblicherweise von einer Klimatisierungsvorrichtung der Ladestation abgeführt.

Dabei wird der Klimatisierungsvorrichtung Außenluft, insbesondere zur Kühlung, zugeführt. Die in der Klimatisierungsvorrichtung erwärmte Luft wird anschließend wieder in die Umgebung abgeführt.

Aufgrund der höheren Wärmeentwicklung in der Ladestation ist es notwendig, eine Klimatisierungsvorrichtung mit einer höheren Kühlleistung vorzusehen. Dies geht üblicherweise mit einer Vergrößerung eines Bauraums der Klimatisierungsvorrichtung einher. Eine Vergrößerung des Bauraums der Klimatisierungsvorrichtung ist jedoch aufgrund des beschränkten Bauraums in der Ladestation unerwünscht.

Ferner benötigt die Klimatisierungsvorrichtung einen höheren Volumenstrom der Außenluft, um die Ladestation bestimmungsgemäß kühlen zu können. Dies geht üblicherweise mit einer vergrößerten Lufteinlassöffnung und Luftauslassöffnung sowie einer vergrößerten Luftführungsvorrichtung in der Ladestation einher, damit der Klimatisierungsvorrichtung genügend Außenluft zugeführt werden kann.

Bei einer vergrößerten Lufteinlassöffnung und Luftauslassöffnung besteht jedoch die Gefahr, dass Spritzwasser, insbesondere bei Regen, Sturm oder beim Reinigen der Ladestation, in die Ladestation eindringt. Ferner begünstigt eine vergrößerte Lufteinlassöffnung und Luftauslassöffnung eine Lärmemission der Ladestation, was wiederum das Wohlbefinden eines Nutzers oder von Anwohnern beeinträchtigt. Eine Vergrößerung des Bauraums der Luftführungsvorrichtung scheidet ebenfalls aufgrund des beschränkten Bauraums in der Ladestation aus.

Der Erfindung liegt daher die Aufgabe zugrunde, eine Luftführungsvorrichtung für eine Klimatisierungsvorrichtung einer Ladestation für Elektrofahrzeuge, eine Klimatisierungsvorrichtung und eine Ladestation zu schaffen, wobei die genannten Nachteile reduziert sind, vorzugsweise nicht auftreten.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten bevorzugten Ausführungsformen.

Die Aufgabe wird insbesondere gelöst, indem eine Luftführungsvorrichtung für eine Klimatisierungsvorrichtung einer Ladestation für Elektrofahrzeuge geschaffen wird. Die Luftführungsvorrichtung weist eine erste Grundfläche, eine der ersten Grundfläche gegenüberliegende zweite Grundfläche und eine die erste Grundfläche und die zweite Grundfläche verbindende Mantelfläche auf. Die erste Grundfläche, die zweite Grundfläche und die Mantelfläche schließen einen Luftführungsraum ein. In dem Luftführungsraum ist ein Luftbereichstrennelement angeordnet, das den Luftführungsraum in einen Lufteinlassraum und in einen Luftauslassraum unterteilt. Die Mantelfläche weist auf einer dem Lufteinlassraum zugeordneten ersten Seite eine Lufteinlassöffnung und auf einer dem Luftauslassraum zugeordneten - insbesondere der ersten Seite gegenüberliegenden - zweiten Seite eine Luftauslassöffnung auf. Die erste Grundfläche weist in dem Lufteinlassraum einen Luftauslassanschluss und in dem Luftauslassraum einen Lufteinlassanschluss auf, sodass die Lufteinlassöffnung strömungstechnisch über den Lufteinlassraum mit dem Luftauslassanschluss und die Luftauslassöffnung strömungstechnisch über den Luftauslassraum mit dem Lufteinlassanschluss verbunden ist. Auf diese Weise wird vorteilhaft eine besonders kompakte Luftführungsvorrichtung bereitgestellt. Insbesondere sind die Lufteinlassöffnung und die Luftauslassöffnung vorteilhaft auf gegenüberliegenden Seiten angeordnet, sodass eine aus der Luftauslassöffnung austretende, insbesondere durch die Klimatisierungsvorrichtung erwärmte, Abluft nicht wieder angesaugt wird. Insbesondere kann die Luftführungsvorrichtung derart in einer Ladestation angeordnet werden, dass die insbesondere lärmintensivere Luftauslassöffnung an einer einem Nutzer abgewandten Seite der Ladestation angeordnet ist. Insbesondere wird dadurch vorteilhaft das Nutzererlebnis nicht beeinträchtigt.

Insbesondere ist die Mantelfläche aus vier Teil-Mantelflächen gebildet, nämlich einer ersten Teil-Mantelfläche und einer der ersten Teil-Mantelfläche gegenüberliegenden dritten Teil-Mantelfläche sowie einer zweiten Teil-Mantelfläche und einer der zweiten Teil-Mantelfläche gegenüberliegenden vierten Teil-Mantelfläche. Insbesondere ist die Luftführungsvorrichtung mit den vier Teil-Mantelflächen, der ersten Grundfläche und der zweiten Grundfläche kastenförmig ausgebildet. Insbesondere ist die Lufteinlassöffnung auf der ersten Teil-Mantelfläche angeordnet. Insbesondere ist die Luftauslassöffnung auf der dritten Teil-Mantelfläche angeordnet.

Als Ladestation wird in der Elektrotechnik jedwede, insbesondere stationäre oder mobile, Vorrichtung oder elektrische Anlage bezeichnet, welche dazu dient, mobilen akkubetriebenen Geräten, Maschinen oder Kraftfahrzeugen durch einfaches Einstellen oder Einstecken Energie zuzuführen, ohne den Energiespeicher - etwa die Traktionsbatterie eines Elektroautos - zwangsläufig entnehmen zu müssen. Ladestationen für Elektroautos werden mitunter auch als "Stromtankstellen" bezeichnet und können mehrere Ladepunkte umfassen. Bekannt sind hier insbesondere Gleichstrom-Schnellladesysteme (high performance charging systems oder high power charging systems, HPC-Systeme) wie das in Europa verbreitete, sogenannte kombinierte Ladesystem (combined charging system, CCS). Beim gattungsmäßigen Gleichstromladen wird Gleichstrom aus der Ladestation direkt in die Batterie des Fahrzeugs eingespeist und hierzu durch einen leistungsstarken Gleichrichter, bevorzugt der Ladestation, vom Stromnetz oder durch große Pufferakkumulatoren an z.B. Solartankstellen bereitgestellt. Im Fahrzeug befindet sich ein Batteriemanagementsystem, das mit der Ladestation direkt oder indirekt kommuniziert, um die Stromstärke und -spannung anzupassen oder bei Erreichung einer vorbestimmten Kapazitätsgrenze den Vorgang zu beenden. Eine Leistungselektronik befindet sich hierbei üblicherweise in der Ladestation. Da die Gleichstromanschlüsse der Ladestation direkt - ohne Umweg über einen AC/DC-Wandler des Fahrzeugs - mit entsprechenden Anschlüssen der Traktionsbatterie verbunden werden, lassen sich verlustarm hohe Ladeströme übertragen, was kurze Ladezeiten ermöglicht.

In einer Ausführungsform ist die Ladestation als eine Ladesäule ausgebildet. Insbesondere weist die Ladestation mindestens einen Ladepunkt, insbesondere genau einen Ladepunkt oder genau zwei Ladepunkte, auf.

Insbesondere ist die Ladestation als Schnellladestation ausgebildet. In einer Ausführungsform ist die Ladestation als batteriegestützte Ladestation, insbesondere als batteriegestützte Schnellladestation, ausgebildet.

Gemäß einer Weiterbildung der Erfindung ist vorgesehen, dass der Luftauslassanschluss eingerichtet ist, um lösbar mit einem Lufteingang der Klimatisierungsvorrichtung verbunden zu werden, wobei der Lufteinlassanschluss eingerichtet ist, um lösbar mit einem Luftausgang der Klimatisierungsvorrichtung verbunden zu werden. Auf diese Weise ist die Klimatisierungsvorrichtung besonders flexibel strömungstechnisch mit der Luftführungsvorrichtung verbindbar. Insbesondere strömt die Luft von der Lufteinlassöffnung über den Lufteinlassraum zu dem Luftauslassanschluss, wo sie über den Lufteingang in die Klimatisierungsvorrichtung eintritt, sie durchströmt dann die Klimatisierungsvorrichtung, verlässt diese wieder über den Luftausgang, wo sie durch den Lufteinlassanschluss in den Luftauslassraum eintritt, um dann durch die Luftauslassöffnung aus der Luftführungsvorrichtung auszutreten.

Lösbar bedeutet im Kontext der vorliegenden technischen Lehre insbesondere zerstörungsfrei lösbar.

Insbesondere ist der Luftauslassanschluss eingerichtet, um steckfrei lösbar, insbesondere schraubfrei lösbar, insbesondere mittels relativer Scherbewegung lösbar mit dem Lufteingang der Klimatisierungsvorrichtung verbunden zu werden. Alternativ oder zusätzlich ist der Lufteinlassanschluss eingerichtet, um steckfrei lösbar, insbesondere schraubfrei lösbar, insbesondere mittels relativer Scherbewegung lösbar mit dem Luftausgang der Klimatisierungsvorrichtung verbunden zu werden.

Gemäß einer Weiterbildung der Erfindung ist vorgesehen, dass die Luftführungsvorrichtung bereichsweise als ein Gehäuse der Ladestation ausgebildet oder durch das Gehäuse gebildet ist. Vorteilhaft wird hierdurch eine besonders kompakte Bauweise ermöglicht.

Gemäß einer Weiterbildung der Erfindung ist vorgesehen, dass die zweite Grundfläche öffenbar an der Luftführungsvorrichtung angeordnet ist, insbesondere um von einer Geschlossen-Position in eine Offen-Position verlagert zu werden. Auf diese Weise ist vorteilhaft der Luftführungsraum, insbesondere der Lufteinlassanschluss und der Luftauslassanschluss, besonders einfach für eine Wartung und/oder Reinigung zugänglich.

In einer Ausführungsform ist die zweite Grundfläche von der Luftführungsvorrichtung abnehmbar, insbesondere vollständig abnehmbar. Insbesondere ist die Geschlossen-Position eine Position, in der die zweite Grundfläche bestimmungsgemäß an der Luftführungsvorrichtung angeordnet ist, insbesondere derart, dass die zweite Grundfläche den Luftführungsraum einschließt. Insbesondere ist die Offen-Position eine Position, in der die zweite Grundfläche von der Luftführungsvorrichtung abgenommen, insbesondere vollständig abgenommen ist, insbesondere derart, dass die zweite Grundfläche den Luftführungsraum nicht mehr einschließt, insbesondere freigibt.

In einer anderen Ausführungsform ist die zweite Grundfläche klappbar an der Luftführungsvorrichtung angeordnet. Insbesondere ist die Geschlossen-Position eine Position, in der die zweite Grundfläche zugeklappt ist, insbesondere derart, dass die zweite Grundfläche den Luftführungsraum einschließt. Insbesondere ist die Offen-Position eine Position, in der die zweite Grundfläche aufgeklappt ist, insbesondere derart, dass die zweite Grundfläche den Luftführungsraum nicht mehr einschließt, insbesondere freigibt.

Gemäß einer Weiterbildung der Erfindung ist vorgesehen, dass eine Luftöffnung, ausgewählt aus der Lufteinlassöffnung und der Luftauslassöffnung, wenigstens ein Fluidablenkelement aufweist. Das wenigstens eine Fluidablenkelement ist derart angeordnet und ausgebildet, dass ein - insbesondere teilweise oder vollständig - auf die Luftöffnung ausgerichteter oder in die Luftöffnung eindringender Fluidstrahl von der Luftöffnung weggelenkt oder aus der Luftöffnung herausgelenkt wird, vorzugsweise derart, dass der Fluidstrahl einen der Luftöffnung zugeordneten Luftbereich, ausgewählt aus dem Lufteinlassraum und dem Luftauslassraum, nicht erreicht. Auf diese Weise sind der Lufteinlassraum und der Luftauslassraum vorteilhaft vor Spritzwasser, insbesondere bei Regen oder Sturm, geschützt. Ferner ist es möglich, dass eine Außenfläche der als Gehäuse ausgebildeten Luftführungsvorrichtung besonders einfach, insbesondere mit einem Hochdruckreiniger, gereinigt werden kann. Mittels der besonders angeordneten und ausgebildeten Fluidablenkelemente ist es vorteilhaft möglich, einen für die Klimatisierungsvorrichtung zur Klimatisierung notwendigen Luftvolumenstrom sicher zuführen und abführen zu können.

Insbesondere sind wenigstens zwei Fluidablenkelemente des wenigstens einen Fluidablenkelements derart angeordnet und ausgebildet, dass ein auf das erste Fluidablenkelement der wenigstens zwei Fluidablenkelemente auftreffender Fluidstrahl derart umgelenkt wird, dass der Fluidstrahl, insbesondere teilweise oder vollständig, auf wenigstens ein weiteres Fluidablenkelement der wenigstens zwei Fluidablenkelemente trifft. Insbesondere wird der Fluidstrahl mittels des wenigstens einen weiteren Fluidablenkelements aus der Luftöffnung herausgelenkt.

Die Aufgabe wird auch gelöst, indem eine Klimatisierungsvorrichtung für eine Ladestation zum Verbinden mit einer erfindungsgemäßen Luftführungsvorrichtung oder einer Luftführungsvorrichtung nach einer oder mehreren der zuvor beschriebenen Ausführungsformen geschaffen wird. Die Klimatisierungsvorrichtung weist einen Lufteingang, einen Luftausgang und einen strömungstechnisch zwischen dem Lufteingang und dem Luftausgang angeordneten Klimatisierungsbereich auf. Der Lufteingang und der Luftausgang sind auf einer selben Seite der Klimatisierungsvorrichtung angeordnet. Der Lufteingang ist eingerichtet, um lösbar mit dem Luftauslassanschluss der Luftführungsvorrichtung verbunden zu werden. Der Luftausgang ist eingerichtet, um lösbar mit dem Lufteinlassanschluss der Luftführungsvorrichtung verbunden zu werden. Auf diese Weise wird vorteilhaft eine besonders kompakte Klimatisierungsvorrichtung bereitgestellt. Mittels der auf einer selben Seite angeordneten Luftgänge, das heißt dem Lufteingang und dem Luftausgang, ist ein besonders einfaches Zusammenwirken mit der Luftführungsvorrichtung gewährleistet. Insbesondere verwirklichen sich die bereits in Zusammenhang mit der Luftführungsvorrichtung erläuterten Vorteile.

Die Klimatisierungsvorrichtung ist insbesondere kastenförmig ausgebildet.

Gemäß einer Weiterbildung der Erfindung ist vorgesehen, dass die Klimatisierungsvorrichtung ein in dem Klimatisierungsbereich angeordnetes Luftklimatisierungsmodul aufweist, das insbesondere ein Lufttrocknungsmodul und ein Kondensatabscheidungsmodul aufweist. Vorzugsweise weist die Klimatisierungsvorrichtung ein Durchlaufkühlermodul auf, das eingerichtet ist, um ein Fluid einer Fluidkühlungsvorrichtung der Ladestation zu temperieren. Durch die kompakte Integration mehrere Module ist die Klimatisierungsvorrichtung besonders flexibel und bauraumsparend einsetzbar. Insbesondere ist die Klimatisierungsvorrichtung bevorzugt eingerichtet, um zwei verschiedene Kühlmechanismen für die Ladestation bereitzustellen, nämlich zum einen mit dem Luftklimatisierungsmodul eine Luftkühlung, insbesondere für Batteriemodule der Ladestation, sowie mit dem Durchlaufkühlermodul eine Flüssigkeitskühlung, insbesondere für eine Leistungselektronik der Ladestation.

Die Aufgabe wird auch gelöst, indem eine Ladestation mit einer erfindungsgemäßen Luftführungsvorrichtung oder einer Luftführungsvorrichtung nach einer oder mehreren der zuvor beschriebenen Ausführungsformen und mit einer erfindungsgemäßen Klimatisierungsvorrichtung oder einer Klimatisierungsvorrichtung nach einer oder mehreren der zuvor beschriebenen Ausführungsformen geschaffen wird. Die Luftführungsvorrichtung und die Klimatisierungsvorrichtung sind derart, insbesondere unmittelbar, benachbart in der Ladestation angeordnet - insbesondere geodätisch übereinander -, dass der Luftauslassanschluss der Luftführungsvorrichtung lösbar mit dem Lufteingang der Klimatisierungsvorrichtung strömungstechnisch verbindbar, insbesondere verbunden ist und dass der Lufteinlassanschluss der Luftführungsvorrichtung lösbar mit dem Luftausgang der Klimatisierungsvorrichtung strömungstechnisch verbindbar, insbesondere verbunden ist. In Zusammenhang mit der Ladestation ergeben sich insbesondere die Vorteile, die bereits in Zusammenhang mit der Luftführungsvorrichtung und der Klimatisierungsvorrichtung erläutert wurden.

Gemäß einer Weiterbildung der Erfindung ist vorgesehen, dass die Luftführungsvorrichtung derart in einem Dachbereich der Ladestation angeordnet ist, dass die zweite Grundfläche einen geodätisch oben angeordneten, insbesondere abnehmbaren, Gehäusedeckel des Gehäuses der Ladestation bildet. Alternativ ist vorgesehen, dass die Luftführungsvorrichtung derart in einem Bodenbereich der Ladestation angeordnet ist, dass die zweite Grundfläche einen geodätisch unten angeordneten, insbesondere abnehmbaren, Gehäuseboden des Gehäuses der Ladestation bildet. Auf diese Weise ist vorteilhaft der Luftführungsraum, insbesondere der Lufteinlassanschluss und der Luftauslassanschluss, besonders einfach für eine Wartung und/oder Reinigung zugänglich.

Insbesondere weist die den Gehäusedeckel oder Gehäuseboden der Ladestation bildende zweite Grundfläche eine Mehrzahl, insbesondere zwei oder vier, Transportelemente auf. Insbesondere kann die Ladestation mittels der Transportelemente durch eine Hebevorrichtung, insbesondere durch einen Kran oder einen Gabelstapler, angehoben werden. Insbesondere weisen die Transportelemente jeweils eine Öse, einen Haken oder einen Gabeleingriff auf, oder sind durch eine Öse, einen Haken oder einen Gabeleingriff gebildet.

Gemäß einer Weiterbildung der Erfindung ist vorgesehen, dass die Klimatisierungsvorrichtung mittels einer Verlagerungsvorrichtung verlagerbar in der Ladestation angeordnet ist. Die Klimatisierungsvorrichtung ist mittels der Verlagerungsvorrichtung, insbesondere örtlich, zwischen einer in der Ladestation angeordneten Betriebsposition und wenigstens einer zumindest bereichsweise außerhalb der Ladestation angeordneten Wartungsposition verlagerbar. In der Betriebsposition sind der Luftauslassanschluss mit dem Lufteingang und der Lufteinlassanschluss mit dem Luftausgang lösbar strömungstechnisch verbunden. In der wenigstens einen Wartungsposition sind der Luftauslassanschluss von dem Lufteingang und der Lufteinlassanschluss von dem Luftausgang gelöst, insbesondere strömungstechnisch getrennt. Vorteilhaft können auf diese Weise besonders einfach eine Inspektion und eine Wartung der Klimatisierungsvorrichtung und der Ladestation erfolgen. Insbesondere kann die Klimatisierungsvorrichtung bei einem notwendigen Austausch einfach von der Luftführungsvorrichtung getrennt und aus der Ladestation heraus verlagert werden. Vorteilhaft kann die aus der Ladestation verlagerte Klimatisierungsvorrichtung besonders einfach durch eine Hebevorrichtung, insbesondere durch einen Kran oder einen Gabelstapler, angehoben werden.

Die Verlagerungsvorrichtung weist insbesondere wenigstens eine Teleskopschiene auf oder wird durch wenigstens eine Teleskopschiene gebildet. Insbesondere weist die Verlagerungsvorrichtung zwei gegenüberliegende Teleskopschienen auf, an denen die Klimatisierungsvorrichtung verschiebbar gelagert ist.

Die Klimatisierungsvorrichtung ist insbesondere beidseitig mittels der Verlagerungsvorrichtung aus der Ladestation verlagerbar.

Insbesondere ist die Klimatisierungsvorrichtung in wenigstens eine zwischen der Betriebsposition und der wenigstens einen Wartungsposition angeordnete Zwischenposition, insbesondere als wenigstens eine weitere Wartungsposition, verlagerbar.

Gemäß einer Weiterbildung der Erfindung ist vorgesehen, dass der Luftauslassanschluss und der Lufteingang eingerichtet sind, um bei einer Verlagerung der Klimatisierungsvorrichtung in die Betriebsposition miteinander strömungstechnisch verbunden zu werden, und um bei einer Verlagerung der Klimatisierungsvorrichtung von der Betriebsposition weg voneinander gelöst, insbesondere strömungstechnisch getrennt zu werden. Der Lufteinlassanschluss und der Luftausgang sind eingerichtet, um bei einer Verlagerung der Klimatisierungsvorrichtung in die Betriebsposition miteinander strömungstechnisch verbunden zu werden, und um bei einer Verlagerung der Klimatisierungsvorrichtung von der Betriebsposition weg voneinander gelöst, insbesondere strömungstechnisch getrennt zu werden. Auf diese Weise wird die Klimatisierungsvorrichtung besonders einfach strömungstechnisch mit der Luftführungsvorrichtung verbunden. Insbesondere wird vorteilhaft auf ein manuelles und zeitaufwendiges Verschrauben der jeweiligen Anschlüsse verzichtet.

Gemäß einer Weiterbildung der Erfindung ist vorgesehen, dass zwischen dem Luftauslassanschluss und dem Lufteingang ein erstes Abdichtelement angeordnet ist, wobei das erste Abdichtelement wahlweise an dem Luftauslassanschluss oder an dem Lufteingang befestigt ist. Alternativ oder zusätzlich ist zwischen dem Lufteinlassanschluss und dem Luftausgang ein zweites Abdichtelement angeordnet, wobei das zweite Abdichtelement wahlweise an dem Lufteinlassanschluss oder an dem Luftausgang befestigt ist. Auf diese Weise wird vorteilhaft eine Leckage in der Luftführungsvorrichtung reduziert, vorzugsweise vermieden.

Wenigstens ein Abdichtelement, ausgewählt aus dem ersten Abdichtelement und dem zweiten Abdichtelement, weist insbesondere eine Abdichtlippe oder eine Schaumdichtung auf oder ist als eine Abdichtlippe oder eine Schaumdichtung ausgebildet.

Gemäß einer Weiterbildung der Erfindung ist vorgesehen, dass das Luftbereichstrennelement der Luftführungsvorrichtung als eine Tragstruktur der Ladestation ausgebildet ist, die eingerichtet ist, um die Ladestation, insbesondere zum Anheben und/oder für den Transport, mechanisch zu stabilisieren. Vorteilhaft wird auf diese Weise eine besonders kompakte Tragstruktur realisiert. Durch die mechanische Stabilisierung kann die Ladestation einfach und sicher angehoben und transportiert werden, insbesondere wenn die Ladestation mit einer Mehrzahl von Energiespeichermodulen bestückt ist oder wenn eine Wärmespeichervorrichtung der Ladestation mit einem Fluid befüllt, insbesondere vollständig befüllt, ist.

Gemäß einer Weiterbildung der Erfindung ist vorgesehen, dass das Luftbereichstrennelement diagonal zu der ersten Grundfläche und/oder der zweiten Grundfläche angeordnet ist. Auf diese Weise wird vorteilhaft die mechanische Stabilisierung der Ladestation verbessert, insbesondere wird eine gleichmäßige Krafteinleitung ermöglicht.

Die Erfindung wird im Folgenden anhand der Zeichnung näher erläutert. Dabei zeigen:
- Fig. 1a: eine schematische Darstellung eines ersten Zustands eines Ausführungsbeispiels einer Ladestation mit einem Ausführungsbeispiel einer Luftführungsvorrichtung und mit einem Ausführungsbeispiel einer Klimatisierungsvorrichtung,
- Fig. 1b: eine schematische Darstellung eines zweiten Zustands der Ladestation gemäß Figur 1a,
- Fig. 2a: eine schematische Darstellung einer ersten Schnittansicht des ersten Schnitts der Ladestation gemäß Figur 1b,
- Fig. 2b: eine schematische Darstellung einer Vergrößerungsansicht eines Ausschnitts gemäß Figur 2a, und
- Fig. 3: eine schematische Darstellung eines dritten Zustands der Ladestation gemäß Figur 1a.

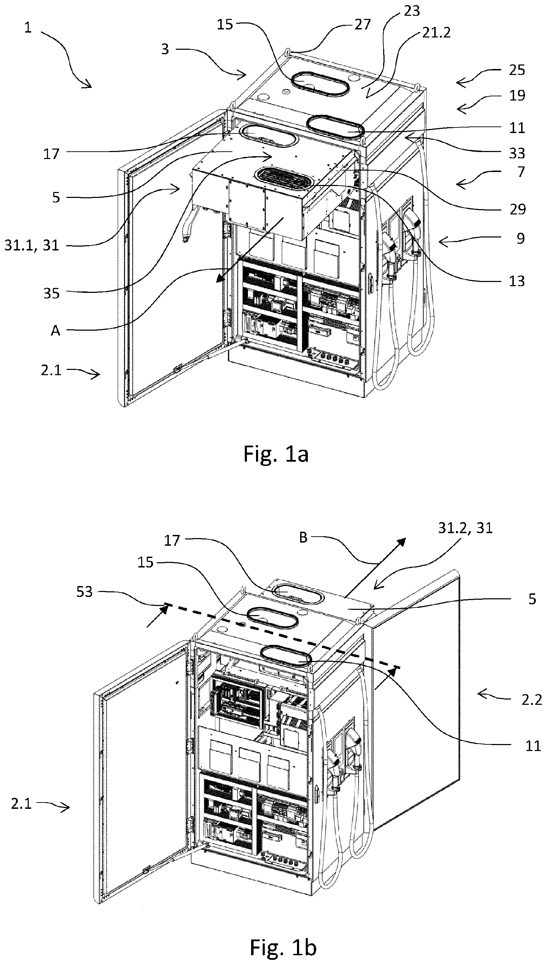

**Figur 1a** zeigt eine schematische Darstellung eines ersten Zustands eines Ausführungsbeispiels einer Ladestation 1 mit einer Luftführungsvorrichtung 3 und mit einer Klimatisierungsvorrichtung 5.

In dem ersten Zustand ist eine erste, insbesondere seitlich angeordnete Gehäusetüre 2.1 der Ladestation 1 geöffnet. Die Ladestation 1 weist auf einer Vorderseite 7 zwei Ladestecker 9 auf, mittels derer jeweils ein hier nicht dargestelltes Elektrofahrzeug geladen werden kann.

Die Klimatisierungsvorrichtung 5 weist einen Lufteingang 13, einen Luftausgang 17 und einen strömungstechnisch zwischen dem Lufteingang 13 und dem Luftausgang 17 angeordneten Klimatisierungsbereich 35 auf. Der Lufteingang 13 und der Luftausgang 17 sind auf einer selben Seite - hier auf einer geodätisch oberen Seite - der Klimatisierungsvorrichtung 5 angeordnet. Der Lufteingang 13 ist eingerichtet, um lösbar mit einem innenliegenden und hier zwar dargestellten, aber in der Realität dem Betrachter verborgenen Luftauslassanschluss 11 der Luftführungsvorrichtung 3 verbunden zu werden. Der Luftausgang 17 ist eingerichtet, um lösbar mit einem innenliegenden und hier zwar dargestellten, aber in der Realität dem Betrachter verborgenen Lufteinlassanschluss 15 der Luftführungsvorrichtung 3 verbunden zu werden. Die Klimatisierungsvorrichtung 5 ist bevorzugt kastenförmig ausgebildet.

Bevorzugt ist vorgesehen, dass die Luftführungsvorrichtung 3 bereichsweise als ein Gehäuse 25 der Ladestation 1 ausgebildet oder durch das Gehäuse 25 gebildet ist.

In diesem Ausführungsbeispiel ist die Luftführungsvorrichtung 3 derart in einem Dachbereich 19 der Ladestation 1 angeordnet, dass eine zweite Grundfläche 21.2 einen geodätisch oben angeordneten, bevorzugt abnehmbaren, Gehäusedeckel 23 des Gehäuses 25 der Ladestation 1 bildet.

Bevorzugt weist die zweite Grundfläche 21.2 wenigstens ein Transportelement 27, hier vier Ösen, auf. Bevorzugt kann die Ladestation 1 mittels des wenigstens einen Transportelements 27 durch eine Hebevorrichtung, bevorzugt durch einen Kran oder einen Gabelstapler angehoben werden.

Bevorzugt ist vorgesehen, dass die Klimatisierungsvorrichtung 5 mittels einer Verlagerungsvorrichtung 29 verlagerbar in der Ladestation 1 angeordnet ist. Die Klimatisierungsvorrichtung 5 ist mittels der Verlagerungsvorrichtung 29, bevorzugt örtlich, zwischen einer in der Ladestation 1 angeordneten, nur angedeuteten Betriebsposition 33 und wenigstens einer zumindest bereichsweise außerhalb der Ladestation 1 angeordneten Wartungsposition 31 verlagerbar.

Bevorzugt ist vorgesehen, dass der Luftauslassanschluss 11 und der Lufteingang 13 eingerichtet sind, um bei einer Verlagerung der Klimatisierungsvorrichtung 5 in die Betriebsposition 33 miteinander strömungstechnisch verbunden zu werden, und um bei einer Verlagerung der Klimatisierungsvorrichtung 5 von der Betriebsposition 33 weg voneinander gelöst, bevorzugt strömungstechnisch getrennt zu werden. Der Lufteinlassanschluss 15 und der Luftausgang 17 sind eingerichtet, um bei einer Verlagerung der Klimatisierungsvorrichtung 5 in die Betriebsposition 33 miteinander strömungstechnisch verbunden zu werden, und um bei einer Verlagerung der Klimatisierungsvorrichtung 5 von der Betriebsposition 33 weg voneinander gelöst, bevorzugt strömungstechnisch getrennt zu werden.

In dem ersten Zustand ist die Klimatisierungsvorrichtung 5 in eine überwiegend außerhalb der Ladestation 1 angeordnete erste Wartungsposition 31.1 der wenigstens einen Wartungsposition 31 in einer durch den Pfeil A dargestellten ersten Richtung verlagert. In der ersten Wartungsposition 31.1 sind der Luftauslassanschluss 11 von dem Lufteingang 13 und der Lufteinlassanschluss 15 von dem Luftausgang 17 gelöst, bevorzugt strömungstechnisch getrennt.

**Figur 1b** zeigt eine schematische Darstellung eines zweiten Zustands der Ladestation 1 gemäß Figur 1a.

Dabei sind gleiche und funktionsgleiche Elemente in allen Figuren mit gleichen Bezugszeichen versehen, sodass insoweit jeweils auf die vorangegangene Beschreibung verwiesen wird.

In dem zweiten Zustand ist die erste Gehäusetüre 2.1 und eine der ersten Gehäusetüre 2.1 gegenüberliegende zweite Gehäusetüre 2.2 geöffnet.

In dem zweiten Zustand ist die Klimatisierungsvorrichtung 5 in eine nur teilweise außerhalb der Ladestation 1 angeordnete zweite Wartungsposition 31.2 der wenigstens einen Wartungsposition 31 in einer von der ersten Richtung verschiedenen - insbesondere dieser entgegengesetzten - und durch den Pfeil B dargestellten zweiten Richtung verlagert. In der zweiten Wartungsposition 31.2 sind der hier zwar dargestellte, aber in der Realität dem Betrachter verborgene Luftauslassanschluss 11 von dem nicht sichtbaren Lufteingang 13 und der hier zwar dargestellte, aber in der Realität dem Betrachter verborgene Lufteinlassanschluss 15 von dem Luftausgang 17 gelöst, bevorzugt strömungstechnisch getrennt.

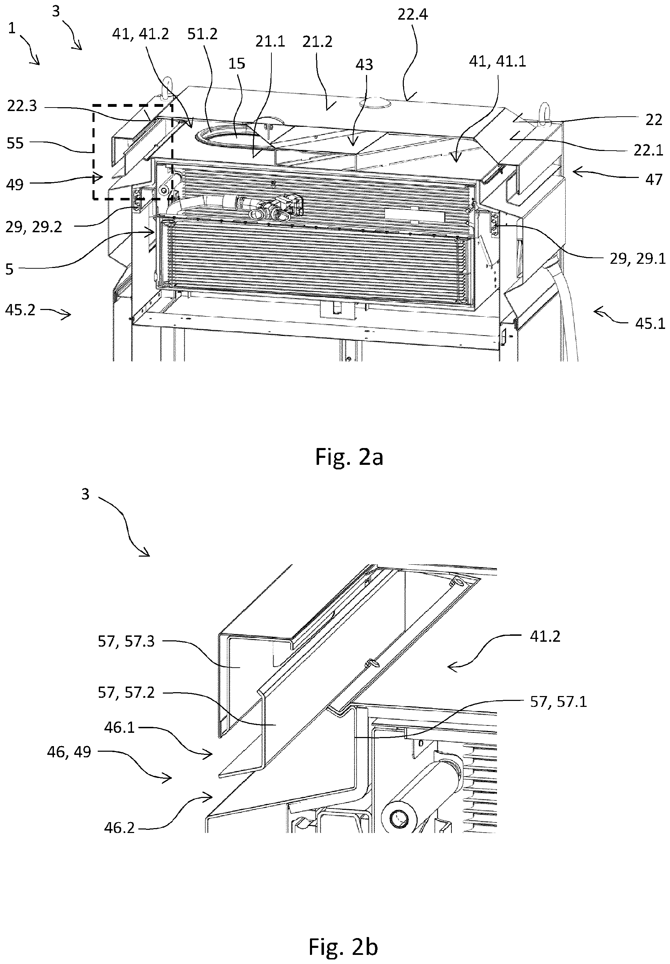

Eine strichliert dargestellter erster Längsschnitt 53 der Ladestation 1 ist in der Figur 2a erläutert.

**Figur 2a** zeigt eine schematische Darstellung einer ersten Schnittansicht des ersten Längsschnitts 53 der Ladestation 1 gemäß Figur 1b.

Die in Figur 1a und 1b dargestellte Klimatisierungsvorrichtung 5 ist hier ebenfalls zu sehen. Bereichsweise ist die Verlagerungsvorrichtung 29 mit einer ersten Teleskopschiene 29.1 und einer zweiten Teleskopschiene 29.2 erkennbar.

Die Luftführungsvorrichtung 3 weist eine erste Grundfläche 21.1, die der ersten Grundfläche 21.1 gegenüberliegende zweite Grundfläche 21.2 und eine die erste Grundfläche 21.1 und die zweite Grundfläche 21.2 verbindende Mantelfläche 22 auf. Die erste Grundfläche 21.1, die zweite Grundfläche 21.2 und die Mantelfläche 22 schließen einen Luftführungsraum 41 ein. In dem Luftführungsraum 41 ist ein Luftbereichstrennelement 43 angeordnet, das den Luftführungsraum 41 in einen Lufteinlassraum 41.1 und in einen Luftauslassraum 41.2 unterteilt. Die Mantelfläche 22 weist auf einer dem Lufteinlassraum 41.1 zugeordneten ersten Seite 45.1 eine Lufteinlassöffnung 47 und auf einer dem Luftauslassraum 41.2 zugeordneten zweiten Seite 45.2 eine Luftauslassöffnung 49 auf. Die erste Grundfläche 21.1 weist in dem Lufteinlassraum 41.1 den hier nicht dargestellten Luftauslassanschluss 11 und in dem Luftauslassraum 41.2 den Lufteinlassanschluss 15 auf, sodass die Lufteinlassöffnung 47 strömungstechnisch über den Lufteinlassraum 41.1 mit dem Luftauslassanschluss 11 und die Luftauslassöffnung 49 strömungstechnisch über den Luftauslassraum 41.2 mit dem Lufteinlassanschluss 15 verbunden ist.

Bevorzugt ist die Mantelfläche 22 aus vier Teil-Mantelflächen gebildet, nämlich aus einer ersten Teil-Mantelfläche 22.1 und einer der ersten Teil-Mantelfläche 22.1 gegenüberliegenden dritten Teil-Mantelfläche 22.3 sowie einer nicht sichtbaren und aus der Bildebene hervortretenden zweiten Teil-Mantelfläche und einer der zweiten Teil-Mantelfläche 22.2 gegenüberliegenden vierten Teil-Mantelfläche 22.4. Bevorzugt ist die Luftführungsvorrichtung 3 mittels der vier Teil-Mantelflächen, der ersten Grundfläche 21.1 und der zweiten Grundfläche 21.2 kastenförmig ausgebildet. Bevorzugt ist die Lufteinlassöffnung 47 an der ersten Teil-Mantelfläche 22.1 angeordnet. Bevorzugt ist die Luftauslassöffnung 49 an der dritten Teil-Mantelfläche 22.3 angeordnet.

Bevorzugt ist vorgesehen, dass zwischen dem Luftauslassanschluss 11 und dem Lufteingang 13 ein hier nicht sichtbares erstes Abdichtelement angeordnet ist, wobei das erste Abdichtelement 51.1 wahlweise an dem Luftauslassanschluss 11 oder an dem Lufteingang 13 befestigt ist. Zwischen dem Lufteinlassanschluss 15 und dem Luftausgang 17 ist ein zweites Abdichtelement 51.2 angeordnet, wobei das zweite Abdichtelement 51.2 wahlweise an dem Lufteinlassanschluss 15 oder an dem Luftausgang 17 befestigt ist.

In diesem Ausführungsbeispiel ist das nicht sichtbare erste Abdichtelement 51.1 an dem Luftauslassanschluss 11 und das zweite Abdichtelement 51.2 an dem Lufteinlassanschluss 15 befestigt.

Ein strichliert dargestellter Ausschnitt 55 ist in Figur 2b erläutert.

**Figur 2b** zeigt eine schematische Darstellung einer Vergrößerungsansicht des Ausschnitts 55 gemäß Figur 2a.

Die Vergrößerungsansicht zeigt die Luftauslassöffnung 49 der Luftführungsvorrichtung 3. Die nachfolgende Erläuterung gilt entsprechend auch für die hier nicht dargestellte Lufteinlassöffnung 47.

Bevorzugt ist vorgesehen, dass eine Luftöffnung 46, ausgewählt aus der Lufteinlassöffnung 47 und der Luftauslassöffnung 49, wenigstens ein Fluidablenkelement 57 aufweist. Das wenigstens eine Fluidablenkelement 57 ist derart angeordnet und ausgebildet, dass ein, bevorzugt teilweise oder vollständig, auf die Luftöffnung 46 ausgerichteter oder in die Luftöffnung 46 eindringender Fluidstrahl von der Luftöffnung 46 weggelenkt oder aus der Luftöffnung 46 herausgelenkt wird, vorzugsweise derart, dass der Fluidstrahl einen der Luftöffnung 46 zugeordneten Luftbereich, ausgewählt aus dem Lufteinlassraum 41.1 und dem Luftauslassraum 41.2, nicht erreicht.

Die hier gezeigte Luftöffnung 46 weist ein erstes Fluidablenkelement 57.1, ein zweites Fluidablenkelement 57.2 und ein drittes Fluidablenkelement 57.3 auf. Die Luftöffnung 46 ist ferner durch eine geodätisch oberhalb angeordnete erste Teil-Luftöffnung 46.1 und eine geodätisch unterhalb angeordnete zweite Teil-Luftöffnung 46.2 gebildet.

Ein in die erste Teil-Luftöffnung 46.1 eindringender Fluidstrahl wird von dem zweiten Fluidablenkelement 57.2 derart weggelenkt, dass der Fluidstrahl auf das dritte Fluidablenkelement 57.3 trifft und anschließend aus der Luftöffnung 46 austritt.

Ein in die zweite Teil-Luftöffnung 46.2 eindringender Fluidstrahl wird von dem ersten Fluidablenkelement 57.1 derart weggelenkt, dass der Fluidstrahl auf das zweite Fluidablenkelement 57.2 trifft und anschließend aus der Luftöffnung 46 austritt.

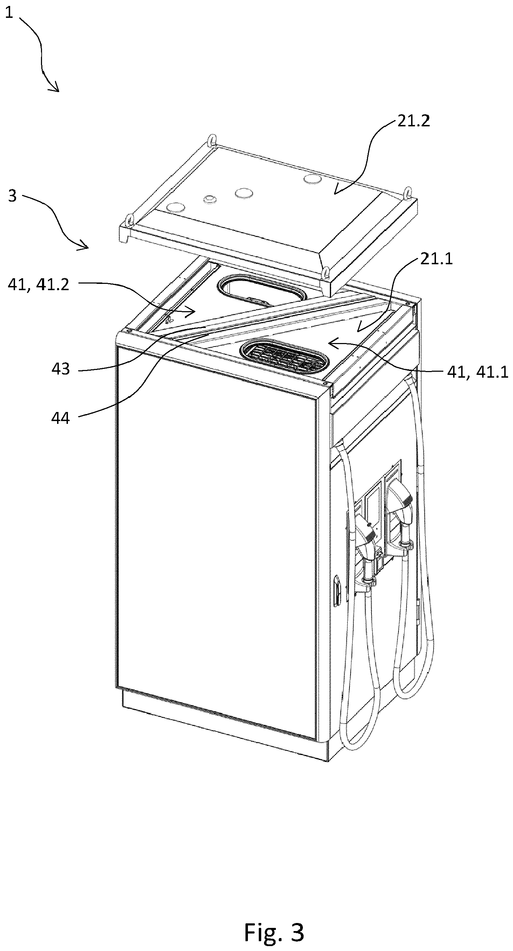

**Figur 3** zeigt eine schematische Darstellung eines dritten Zustands der Ladestation 1 gemäß Figur 1a.

Bevorzugt ist vorgesehen, dass die zweite Grundfläche 21.2 öffenbar an der Luftführungsvorrichtung 3 angeordnet ist, um bevorzugt von einer Geschlossen-Position in eine Offen-Position verlagert zu werden.

In diesem Ausführungsbeispiel ist die zweite Grundfläche 21.2 von der Luftführungsvorrichtung 3 abnehmbar, bevorzugt vollständig abnehmbar.

Bevorzugt ist vorgesehen, dass das Luftbereichstrennelement 43 der Luftführungsvorrichtung 3 als eine Tragstruktur 44 der Ladestation 1 ausgebildet ist, die eingerichtet ist, um die Ladestation 1, bevorzugt zum Anheben und/oder für den Transport, mechanisch zu stabilisieren.

Bevorzugt ist vorgesehen, dass das Luftbereichstrennelement 43 diagonal zu der ersten Grundfläche 21.1 und/oder der zweiten Grundfläche 21.2 angeordnet ist.

Hier ist besonders gut zu erkennen, wie das als Tragstruktur 44 ausgebildete Luftbereichstrennelement 43 den Luftführungsraum 41 in den Lufteinlassraum 41.1 und den Luftauslassraum 41.2 unterteilt.

## Patentansprüche

1. Luftführungsvorrichtung (3) für eine Klimatisierungsvorrichtung (5) einer Ladestation (1) für Elektrofahrzeuge, wobei
- die Luftführungsvorrichtung (3) eine erste Grundfläche (21.1), eine der ersten Grundfläche (21.1) gegenüberliegende zweite Grundfläche (21.2) und eine die erste Grundfläche (21.1) und die zweite Grundfläche (21.2) verbindende Mantelfläche (22) aufweist, wobei die erste Grundfläche (21.1), die zweite Grundfläche (21.2) und die Mantelfläche (22) einen Luftführungsraum (41) einschließen, wobei
- in dem Luftführungsraum (41) ein Luftbereichstrennelement (43) angeordnet ist, das den Luftführungsraum (41) in einen Lufteinlassraum (41.1) und in einen Luftauslassraum (41.2) unterteilt, wobei
- die Mantelfläche (22) auf einer dem Lufteinlassraum (41.1) zugeordneten ersten Seite (45.1) eine Lufteinlassöffnung (47) und auf einer dem Luftauslassraum (41.2) zugeordneten zweiten Seite (45.2) eine Luftauslassöffnung (49) aufweist, wobei
- die erste Grundfläche (21.1) in dem Lufteinlassraum (41.1) einen Luftauslassanschluss (11) und in dem Luftauslassraum (41.2) einen Lufteinlassanschluss (15) aufweist, sodass
- die Lufteinlassöffnung (47) strömungstechnisch über den Lufteinlassraum (41.1) mit dem Luftauslassanschluss (11) und die Luftauslassöffnung (49) strömungstechnisch über den Luftauslassraum (41.2) mit dem Lufteinlassanschluss (15) verbunden ist.

2. Luftführungsvorrichtung (3) nach Anspruch 1, wobei
- der Luftauslassanschluss (11) eingerichtet ist, um lösbar mit einem Lufteingang (13) der Klimatisierungsvorrichtung (5) verbunden zu werden, wobei
- der Lufteinlassanschluss (15) eingerichtet ist, um lösbar mit einem Luftausgang (17) der Klimatisierungsvorrichtung (5) verbunden zu werden.

3. Luftführungsvorrichtung (3) nach einem der vorhergehenden Ansprüche, wobei die Luftführungsvorrichtung (3) bereichsweise als ein Gehäuse (25) der Ladestation (1) ausgebildet oder durch das Gehäuse (25) gebildet ist.

4. Luftführungsvorrichtung (3) nach einem der vorhergehenden Ansprüche, wobei die zweite Grundfläche (21.2) öffenbar an der Luftführungsvorrichtung (3) angeordnet ist.

5. Luftführungsvorrichtung (3) nach einem der vorhergehenden Ansprüche, wobei
- eine Luftöffnung (46), ausgewählt aus der Lufteinlassöffnung (47) und der Luftauslassöffnung (49), wenigstens ein Fluidablenkelement (57) aufweist, wobei
- das wenigstens eine Fluidablenkelement (57) derart angeordnet und ausgebildet ist, dass ein auf die Luftöffnung (46) ausgerichteter oder in die Luftöffnung (46) eindringender Fluidstrahl von der Luftöffnung (46) weggelenkt oder aus der Luftöffnung (46) herausgelenkt wird, vorzugsweise derart,
- dass der Fluidstrahl einen der Luftöffnung (46) zugeordneten Luftbereich, ausgewählt aus dem Lufteinlassraum (41.1) und dem Luftauslassraum (41.2), nicht erreicht.

6. Klimatisierungsvorrichtung (5) zum Verbinden mit einer Luftführungsvorrichtung (3) nach einem der Ansprüche 1 bis 5 für eine Ladestation (1), wobei die Klimatisierungsvorrichtung (5) einen Lufteingang (13), einen Luftausgang (17) und einen strömungstechnisch zwischen dem Lufteingang (13) und dem Luftausgang (17) angeordneten Klimatisierungsbereich (35) aufweist, wobei
- der Lufteingang (13) und der Luftausgang (17) auf einer selben Seite der Klimatisierungsvorrichtung (5) angeordnet sind, wobei
- der Lufteingang (13) eingerichtet ist, um lösbar mit dem Luftauslassanschluss (11) der Luftführungsvorrichtung (3) verbunden zu werden, wobei
- der Luftausgang (17) eingerichtet ist, um lösbar mit dem Lufteinlassanschluss (15) der Luftführungsvorrichtung (3) verbunden zu werden.

7. Klimatisierungsvorrichtung (5) nach Anspruch 6, aufweisend
- ein in dem Klimatisierungsbereich (35) angeordnetes Luftklimatisierungsmodul, das insbesondere ein Lufttrocknungsmodul und ein Kondensatabscheidungsmodul aufweist, und vorzugsweise
- ein Durchlaufkühlermodul, das eingerichtet ist, um ein Fluid einer Fluidkühlungsvorrichtung der Ladestation (1) zu temperieren.

8. Ladestation (1) mit einer Luftführungsvorrichtung (3) nach einem der Ansprüche 1 bis 5 und mit einer Klimatisierungsvorrichtung (5) nach Anspruch 6 oder 7, wobei
- die Luftführungsvorrichtung (3) und die Klimatisierungsvorrichtung (5) derart benachbart in der Ladestation (1) angeordnet sind, dass
- der Luftauslassanschluss (11) der Luftführungsvorrichtung (3) lösbar mit dem Lufteingang (13) der Klimatisierungsvorrichtung (5) strömungstechnisch verbunden ist, und dass
- der Lufteinlassanschluss (15) der Luftführungsvorrichtung (3) lösbar mit dem Luftausgang (17) der Klimatisierungsvorrichtung (5) strömungstechnisch verbunden ist.

9. Ladestation (1) nach Anspruch 8, wobei
- die Luftführungsvorrichtung (3) derart in einem Dachbereich (19) der Ladestation (1) angeordnet ist, dass die zweite Grundfläche (21.2) einen geodätisch oben angeordneten Gehäusedeckel (23) des Gehäuses (25) der Ladestation (1) bildet, oder
- die Luftführungsvorrichtung (3) derart in einem Bodenbereich der Ladestation (1) angeordnet ist, dass die zweite Grundfläche (21.2) einen geodätisch unten angeordneten Gehäuseboden des Gehäuses (25) der Ladestation (1) bildet.

10. Ladestation (1) nach Anspruch 8 oder 9, wobei
- die Klimatisierungsvorrichtung (5) mittels einer Verlagerungsvorrichtung (29) verlagerbar in der Ladestation (1) angeordnet ist, wobei
- die Klimatisierungsvorrichtung (5) mittels der Verlagerungsvorrichtung (29) zwischen einer in der Ladestation (1) angeordneten Betriebsposition (33) und wenigstens einer zumindest bereichsweise außerhalb der Ladestation (1) angeordneten Wartungsposition (31) verlagerbar ist, wobei
- in der Betriebsposition (33) der Luftauslassanschluss (11) mit dem Lufteingang (13) und der Lufteinlassanschluss (15) mit dem Luftausgang (17) lösbar strömungstechnisch verbunden sind, wobei
- in der wenigstens einen Wartungsposition (31) der Luftauslassanschluss (11) von dem Lufteingang (13) und der Lufteinlassanschluss (15) von dem Luftausgang (17) gelöst, insbesondere strömungstechnisch getrennt sind.

11. Ladestation (1) nach Anspruch 10, wobei
- der Luftauslassanschluss (11) und der Lufteingang (13) eingerichtet sind, um bei einer Verlagerung der Klimatisierungsvorrichtung (5) in die Betriebsposition (33) miteinander strömungstechnisch verbunden zu werden und um bei einer Verlagerung der Klimatisierungsvorrichtung (5) von der Betriebsposition (33) weg, voneinander gelöst, insbesondere strömungstechnisch getrennt zu werden, wobei
- der Lufteinlassanschluss (15) und der Luftausgang (17) eingerichtet sind, um bei einer Verlagerung der Klimatisierungsvorrichtung (5) in die Betriebsposition (33) miteinander strömungstechnisch verbunden zu werden und um bei einer Verlagerung der Klimatisierungsvorrichtung (5) von der Betriebsposition (33) weg, voneinander gelöst, insbesondere strömungstechnisch getrennt zu werden.

12. Ladestation (1) nach einem der Ansprüche 8 bis 11, wobei
- zwischen dem Luftauslassanschluss (11) und dem Lufteingang (13) ein erstes Abdichtelement angeordnet ist, wobei das erste Abdichtelement wahlweise an dem Luftauslassanschluss (11) oder an dem Lufteingang (13) befestigt ist, wobei
- zwischen dem Lufteinlassanschluss (15) und dem Luftausgang (17) ein zweites Abdichtelement (51.2) angeordnet ist, wobei das zweite Abdichtelement (51.2) wahlweise an dem Lufteinlassanschluss (15) oder an dem Luftausgang (17) befestigt ist.

13. Ladestation (1) nach einem der Ansprüche 8 bis 12, wobei das Luftbereichstrennelement (43) der Luftführungsvorrichtung (3) als eine Tragstruktur (44) der Ladestation (1) ausgebildet ist, die eingerichtet ist, um die Ladestation (1) mechanisch zu stabilisieren.

14. Ladestation (1) nach Anspruch 13, wobei das Luftbereichstrennelement (43) diagonal zu der ersten Grundfläche (21.1) und/oder der zweiten Grundfläche (21.2) angeordnet ist.
